# EUROPEAN PATENT APPLICATION

(11) **EP 4 318 071 A1**
(43) Date of publication of application: **07.02.2024**
(21) Application number: 22780348.3
(22) Date of filing: 22.03.2022
(51) Int. Cl.: G02B 21/00

(54) **MICROSCOPE**

(30) Priority: 30.03.2021 JP 2021058891
(71) Applicant: NIKON CORPORATION, Minato-ku Tokyo 108-6290 (JP)
(72) Inventor: TSUCHIDA, Shota, Tokyo 108-6290 (JP); MORISHITA, Yasunori, Tokyo 108-6290 (JP); OSHIDARI, Yuta, Tokyo 108-6290 (JP)
(74) Representative: Hoffmann Eitle
(86) International application number: PCT/JP2022/013324
(87) International publication number: WO 2022/210133

(57) **Abstract**

A microscope includes an illumination optical system which irradiates a specimen with excitation light, a detector which detects fluorescence emitted from the specimen, and an observation optical system which guides fluorescence to the detector, in which the observation optical system includes a first optical filter which has wavelength reflection and transmission characteristics that vary depending on a position where light enters, a second optical filter which is disposed in an optical path of light reflected by the first optical filter and has a boundary wavelength of transmission changing with respect to a position along a first direction, and which transmits light having a wavelength longer than a first boundary wavelength at a position where the light which has been reflected enters, and a third optical filter which is disposed in the optical path of the light reflected by the first optical filter and has a boundary wavelength of transmission changing with respect to a position along the first direction, and which transmits light having a wavelength shorter than a second boundary wavelength at a position where the light which has been reflected enters, and the first boundary wavelength is shorter than the second boundary wavelength.

## Description

### BACKGROUND

### 1. TECHNICAL FIELD

The present invention relates to a microscope.

### 2. RELATED ART

A known fluorescence microscope includes a band pass filter having adjustable wavelength characteristics (see, for example, Patent Document 1).

### Prior Art Document

### Patent document

Patent Document 1: Japanese Patent Application Publication No. 2000-056228

### GENERAL DISCLOSURE

According to a first aspect of the present invention, therein is provided a microscope. The microscope may include an illumination optical system which irradiates a specimen with excitation light. The microscope may include a detector which detects fluorescence emitted from the specimen. The microscope may include an observation optical system which guides fluorescence to the detector. The observation optical system may include a first optical filter which has wavelength reflection and transmission characteristics that vary depending on a position where light enters, may include a second optical filter which is disposed in an optical path of light reflected by the first optical filter and has a boundary wavelength of transmission changing with respect to a position along a first direction, and which transmits light having a wavelength longer than a first boundary wavelength at a position where the light which has been reflected enters, and may include a third optical filter which is disposed in the optical path of the light reflected by the first optical filter and has a boundary wavelength of transmission changing with respect to a position along the first direction, and which transmits light having a wavelength shorter than a second boundary wavelength at a position where the light which has been reflected enters. The first boundary wavelength may be shorter than the second boundary wavelength.

The first optical filter may have the wavelength reflection and transmission characteristics that vary depending on a position along the first direction. With respect to the light which enters, the first optical filter may be disposed to be tilted at an angle of less than 45 degrees in a plane intersecting with the first direction. The second optical filter and the third optical filter may be movable along the first direction. The first optical filter may be movable along the first direction. The first direction may be a gravitational direction. With respect to either one of the second optical filter or the third optical filter, another of the second optical filter or the third optical filter may be disposed to be tilted in a plane intersecting with the first direction. The observation optical system may further include a concave mirror which collects the light reflected by the first optical filter between the second optical filter and the third optical filter. The observation optical system may further include a concave mirror which causes the light reflected by the first optical filter to turn into parallel light beams to enter the second optical filter and the third optical filter.

The observation optical system may include a reflective element on which light having passed through the first optical filter is incident and which reflects at least a part of the light, may include a fourth optical filter which is disposed in an optical path of the light reflected by the reflective element and has a boundary wavelength changing with respect to a position along the first direction, and which transmits light having a wavelength longer than a third boundary wavelength at a position where the light which has been reflected enters, and may include a fifth optical filter which is disposed in the optical path of the light reflected by the reflective element and has a boundary wavelength changing with respect to a position along the first direction, and which transmits light having a wavelength longer than a fourth boundary wavelength at a position where the light which has been reflected enters. The third boundary wavelength may be shorter than the fourth boundary wavelength.

The reflective element may be a sixth optical filter which has wavelength reflection and transmission characteristics that vary depending on a position where light enters or a total reflection mirror. The first optical filter, the second optical filter, and the third optical filter may be accommodated in a first unit, and the sixth optical filter or the reflective element, the fourth optical filter, and the fifth optical filter may be accommodated in a second unit. The first unit and the second unit may be configured to be detachably insertable. The microscope may include a first detector which receives light that is a part of light reflected by the first optical filter and that has travelled through the second optical filter and the third optical filter, and may include a second detector which receives a part of light that has passed through the first optical filter. A light receiving surface of the first detector and a light receiving surface of the second detector may face in a same direction.

The summary clause does not necessarily describe all necessary features of the embodiments of the present invention. The invention may also include a sub-combination of the features described above.

### BRIEF DESCRIPTION OF THE DRAWINGS

Fig. 1 is a schematic view showing the structure of a microscope 101 used to observe a specimen 210.
Fig. 2 schematically shows an example of an observation system subsequent stage 140 and a detection section 160.
Fig. 3 is a schematic view showing a functionality of a LVF 254 as an example.
Fig. 4 is an outline view to describe a range of wavelengths transmitted through wavelength selection unit 151 to be detectable by a detector 161.
Fig. 5 schematically shows detectable ranges of four wavelength selection units 151, 152, 153, and 154.
Fig. 6 schematically shows change of the detectable range in the wavelength selection unit 151.
Fig. 7 schematically shows a light source 110.
Fig. 8 is an example of a flowchart showing an observation procedure of the microscope 101.
Fig. 9 is a flowchart showing a detail of step S12 to create and edit an imaging channel.
Fig. 10 shows an example of a setting screen 300 of Fig. 9.
Fig. 11 shows an example of the setting screen 310 in step S14 to set LVFs or the like for the imaging channel.
Fig. 12 is a flowchart showing a detail of step S16 to set a combination of the imaging channel and a real channel.
Fig. 13 shows an example of a setting screen 320 of Fig. 12.
Fig. 14 is an example of a setting screen 330 in step S18 to set a laser intensity and step S18 to perform sensitivity setting of the detector.
Fig. 15 is a flowchart showing a detail of step S24 that is internal control to acquire an image.
Fig. 16 is a flow chart to acquire a fluorescence spectral distribution by using the microscope 101.
Fig. 17 shows a setting screen 450 corresponding to Fig. 16.
Fig. 18 is a schematic view to describe the acquisition wavelength range and the detection wavelength range corresponding to the observation conditions set in the setting screen 450 shown in Fig. 17.
Fig. 19 shows, as an example, a fluorescence spectrum profile of a portion of the specimen 210 that is detected by the microscope 101.
Fig. 20 shows, as an example, a display image 460 that displays the images acquired in the embodiment described with reference to Figs. 17 to 19.
Fig. 21 is a schematic view to describe the acquisition wavelength range and the detection wavelength range corresponding to the observation conditions set in the setting screen 450 shown in Fig. 17 for each imaging channel.
Fig. 22 is a timing diagram to execute an example to acquire a plurality of fluorescence spectral distributions by using the microscope 101.
Fig. 23 schematically shows an observation system subsequent stage 142 of another example.
Fig. 24 schematically shows an observation system subsequent stage 144 of still another example.
Fig. 25 schematically shows a variant example of the observation system subsequent stage 140.

### DESCRIPTION OF EXEMPLARY EMBODIMENTS

Hereinafter, the present invention will be described through embodiments of the invention, but the following embodiments do not limit the invention according to claims. In addition, not all of the combinations of features described in the embodiments are essential to the solution of the invention.

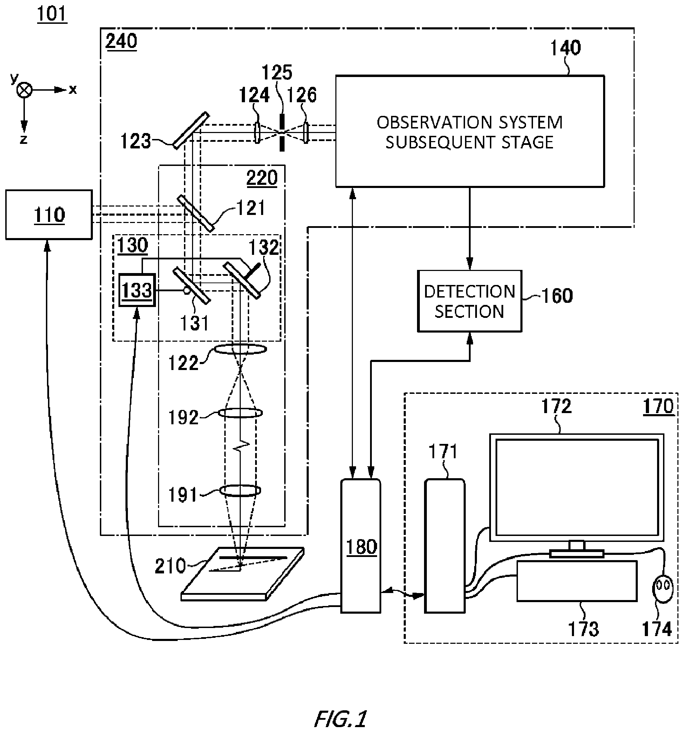

Fig. 1 is a schematic view showing the structure of a microscope 101 used to observe a specimen 210. The microscope 101 is a confocal microscope and includes a light source 110, an illumination optical system 220, an observation optical system 240, a detection section 160, an information processing apparatus 170 and a control apparatus 180. The illumination optical system 220 and the observation optical system 240 share some of the optical elements. Note that the microscope 101 does not necessarily include all of these constituents. For example, the light source 110, information processing apparatus 170, or control apparatus 180 may be omitted.

The light source 110 is configured to emit laser light of a particular wavelength that can be used as the excitation light to observe the specimen 210 using fluorescence. The excitation light emitted from the light source 110 enters the illumination optical system 220.

The illumination optical system 220 irradiates the specimen 210 with excitation light. The illumination optical system 220 includes a dichroic mirror 121, a galvano scanner 130, a relay lens 122, a lens 192 and an objective lens 191. The dichroic mirror 121 has such characteristics that it reflects the wavelength of the excitation light emitted from the light source 110 and transmits the other wavelengths. The excitation light emitted from the light source 110 is reflected by the dichroic mirror 121, so that the propagation direction of the excitation light is changed. As a result, the excitation light enters the galvano scanner 130.

The galvano scanner 130 includes a pair of galvano mirrors 131 and 132 configured to reflect the incident light. The galvano mirror 131 is rotatable around the x axis shown in Fig. 1 and the galvano mirror 132 is rotatable around the y axis. After entering the galvano scanner 130, the excitation light is reflected by the pair of galvano mirrors 131 and 132 and subsequently enters the objective lens 191 after travelling through the relay lens 122 and the lens 192.

After leaving the relay lens 122, the excitation light is turned into parallel light beams by the lens 192 and subsequently converge by the objective lens 191 onto the specimen 210.

The orientations of the galvano mirrors 131 and 132 in the galvano scanner 130 are controlled by a control section 133 to be able to move the light convergence position of the excitation light on the specimen 210. In this manner, the galvano scanner 130 scans the specimen 210 by moving the excitation light in a two-dimensional manner (in the x and y directions in Fig. 1).

The specimen 210 contains, for example, a fluorescent material. In this case, fluorescence is emitted from the light convergence position on the specimen 210. It should be noted that the light emitted from the specimen 210, which may be referred to as the emitted light hereinafter, also contains components other than the fluorescence, such as the reflection of the excitation light.

The emitted light from the specimen 210 travels through the objective lens 191 and the lens 192 and then enters the relay lens 122. The focus position of the lens 192 is optically conjugate with the light convergence position of the excitation light on the specimen 210. After entering the relay lens 122, the emitted light travels through the galvano scanner 130 and then enters the dichroic mirror 121.

The components of the emitted light that have the same wavelength as the excitation light are reflected by the dichroic mirror 121 so as to travel toward the light source 110. The components of the emitted light that have different wavelengths from the excitation light pass through the dichroic mirror 121.

Note that the dichroic mirror 121 can not completely filter out the components that have the same wavelength as the excitation light. Therefore, the emitted light that has passed through the dichroic mirror 121 still contains the components that have the same wavelength as the excitation light.

The observation optical system 240 shares, with the illumination optical system 220, the above-described dichroic mirror 121, galvano scanner 130, relay lens 122, lens 192 and objective lens 191. The observation optical system 240 further includes a reflective mirror 123, a condenser lens 124, a pinhole 125, a collimator lens 126, an observation system subsequent stage 140, and a detection section 160.

After having travelled through the dichroic mirror 121 and been reflected by the reflective mirror 123, the emitted light passes through the condenser lens 124 and subsequently enters the pinhole 125. Here, the pinhole 125 is positioned to be conjugate with the focus position of the objective lens 191. Accordingly, the pinhole 125 only transmits the light emitted from the light convergence position, which is the focus position of the objective lens 191, and blocks the light from the other points as noise.

The observation optical system 240 guides the fluorescence emitted from the specimen 210 to the detection section 160. The detection section 160 detects the fluorescence emitted from the specimen 210. The detection section 160 is configured to output to the information processing apparatus 170 an electrical signal corresponding to the intensity of the detected fluorescence. A detail of the observation system subsequent stage 140 and the detection section 160 in the observation optical system 240 will be described below.

The information processing apparatus 170 includes a control section 171, a display section 172, and input sections 173 and 174. The control section 171 includes an interface for the detection section 160 and is configured to perform image processing to generate an image from the signal obtained from the detection section 160 and furthermore store and save the generated image.

The display section 172 is formed by an LCD panel, a CRT device or the like and is configured to display the generated image to a user and perform other operations including displaying a user interface used to allow the user to enter various settings of the microscope 101. The input sections 173 and 174 include a text input device such as a keyboard and a pointing device such as a mouse and is configured to be used when the user enters settings, operating instructions, and the like into the microscope 101.

Furthermore, the information processing apparatus 170 is also configured to communicate with the control apparatus 180 and to be used as a user interface for the control apparatus 180. The control apparatus 180 holds setting values related to operations of the galvano scanner 130, the observation system subsequent stage 140, the detection section 160, and the like to control these operations. In addition, the control apparatus 180 may perform all or some of the image processing operations and the like that are originally designed to be performed by the information processing apparatus 170, for the purpose of reducing the load on the information processing apparatus 170. In other words, the control apparatus 180 may perform all or some of the operations that are originally designed to be performed by the control section 171 of the information processing apparatus 170. Alternatively, the control section 171 of the information processing apparatus 170 may perform all or some of the operations that are originally designed to be performed by the control apparatus 180.

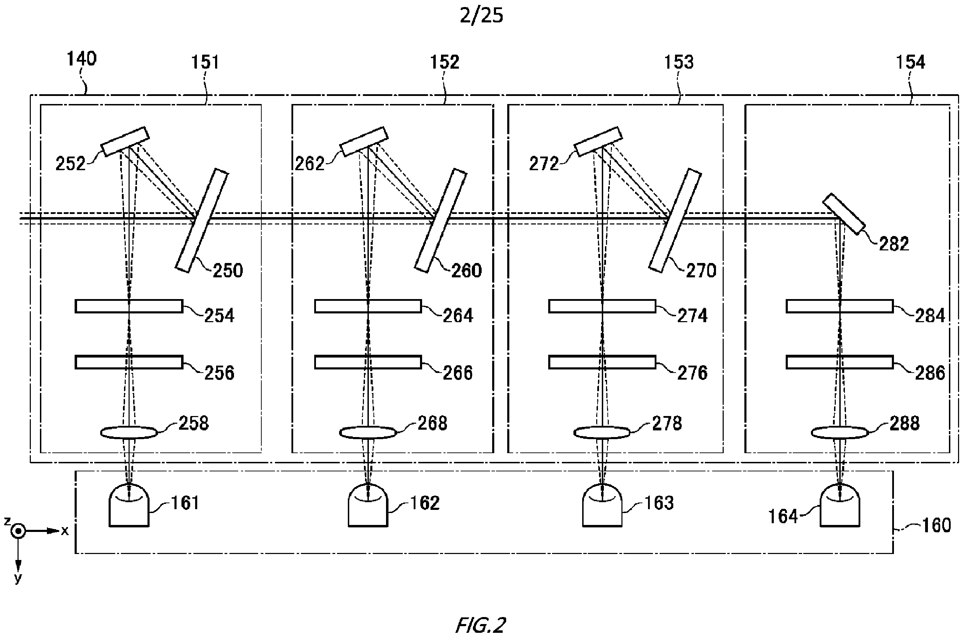

Fig. 2 schematically shows an example of the observation system subsequent stage 140 and the detection section 160. The observation system subsequent stage 140 includes four wavelength selection units 151, 152, 153, and 154. Furthermore, the detection section 160 includes four detectors 161, 162, 163, and 164 respectively corresponding to the four wavelength selection units 151, 152, 153, and 154.

The wavelength selection unit 151 includes an LVF (Linear Variable Filter) 250, a concave mirror 252, a pair of LVFs 254 and 256, and a condenser lens 258. Among those, the LVFs 250, 254, and 256 each have a dielectric layer the thickness of which varies in a predetermined direction (the z direction in Fig. 2) which is formed on a transparent substrate, and has wavelength transmission and reflection characteristics that vary depending on a position through which light passes.

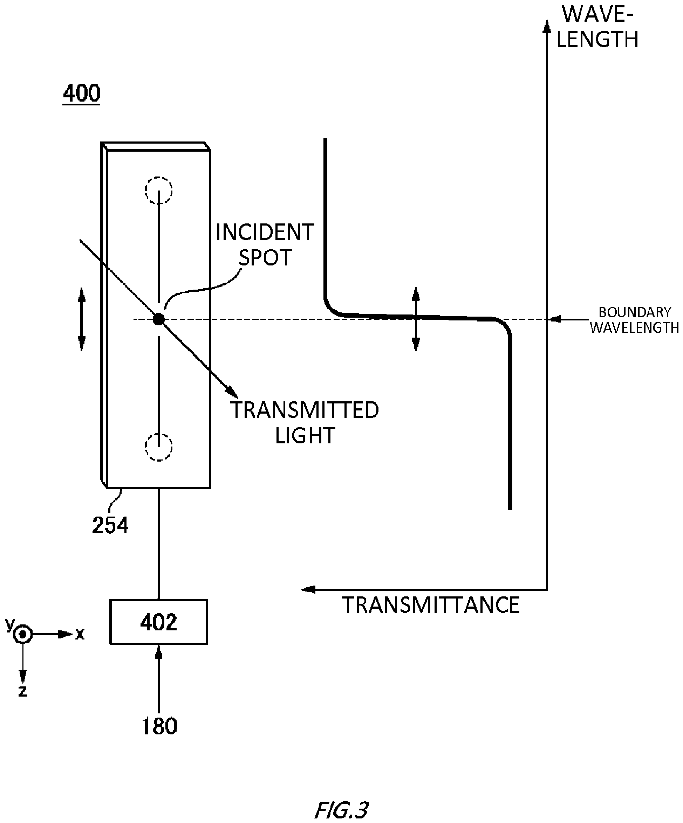

Fig. 3 is a schematic view showing the functionality of the LVF 254 as an example. The LVF 254 has a dielectric layer the thickness of which varies in a predetermined direction (z direction in Fig. 3) which is formed on the transparent substrate, and has wavelength reflection and transmission characteristics that vary depending on a position where light enters. In more detail, a boundary wavelength that is a boundary between a wavelength in which transmission occurs and a wavelength in which reflection occurs varies depending on a position in the z direction where the light enters. Accordingly, when the drive section 402 moves the LVF 254 in the z direction, the wavelength characteristics of the LVF 254 for the incident light, which travels along a fixed optical path, are varied. The LVF 254 and the drive section 402 form an optical filter 400 with the dynamically variable wavelength transmission and reflection characteristics.

The graph shown in the right portion of Fig. 3 shows the wavelength characteristics of the LVF 254. In the graph shown in Fig. 3, the horizontal and vertical axes respectively represent the wavelength and transmittance. The LVF 254 having the wavelength characteristics shown in Fig. 2 is a long pass filter which transmits light having a wavelength longer than the boundary wavelength and reflects light having a wavelength shorter than the boundary wavelength.

With reference to Fig. 2 again, the LVF 250 on which light from the collimator lens 126 is incident functions as a reflective element with varying reflection and transmission characteristics depending on a wavelength of the incident light. That is, the LVF 250 functions as a dichroic mirror. The LVF 250 is a long pass filter which reflects light having a wavelength shorter than the boundary wavelength and transmits light having a wavelength longer than the boundary wavelength. An incident optical path is separated by the LVF 250 into two paths according to the wavelength.

The LVF 250 is movable in the z direction by the drive section similarly as in the optical filter 400 shown in Fig. 3. In this manner, the boundary wavelength for the incident light can be dynamically varied.

The LVF 250 is disposed to be tilted at an angle of less than 45 degrees, preferably 22.5 degrees or less, in an x-y plane with respect to the light entering from the collimator lens 126. That is, a light receiving surface rotates around the z axis such that an angle of incidence of the light to the LVF 250 (that is, an angle defined by a normal of an incident surface of the LVF 250 and a principal ray direction) becomes less than 45 degrees, preferably 22.5 degrees or less. By reducing the angle of incidence in this manner, an ellipticity of a spot shape entering the LVF 250 is maintained to a value close to 1, and an area of the spot shape is decreased. In more detail, the spot shape entering the incident surface of the LVF 250 becomes an oval shape extending in a direction in which the incident surface is inclined. A minor axis of this oval shape keeps a light beam diameter D, but on the other hand, a major axis becomes D/cosθ (θ denotes an angle of incidence). Accordingly, the area of the spot shape when θ is 22.5 degrees is smaller than that when θ is 45 degrees, and also the ellipticity is closer to 1. Thus, fall of a spectral resolution at an incident spot on the LVF 250 can be suppressed.

Furthermore, the incident surface on the LVF 250 is at a position rotated around the z axis. In addition, a direction in which the boundary wavelength varies in the LVF 250 is the z direction. In this manner, the major axis of the oval extends in a direction orthogonal to the z axis, that is, a direction in which there is no variation in the boundary wavelength. Accordingly, the fall of the spectral resolution at the incident spot on the LVF 250 can be further suppressed.

Furthermore, a direction in which the LVF 250 is driven is also the z direction. Thus, when the z direction is a vertical direction, that is, a gravitational direction, since backlash of a mechanical system which drives the LVF 250 is pulled down by its own weight, position reproducibility by driving is high, and positioning accuracy can be increased.

The concave mirror 252 is disposed between the LVF 250 and the pair of LVFs 254 and 256 in an optical path of the wavelength selection unit 151. That is, shorter wavelength light reflected by the LVF 250 enters the concave mirror 252. The concave mirror 252 collects the reflected light between the pair of LVFs 254 and 256. In this manner, by reducing a spot diameter of the light beams entering both the pair of LVFs 254 and 256, the fall of the spectral resolution in each of the LVFs 254 and 256 can be suppressed. Furthermore, when a focal length of the collimator lens 126 is set to be less than a focal length of the concave mirror 252, the spot diameter at the time of incidence on each of the pair of the LVFs 254 and 256 can be decreased. Thus, the fall of the spectral resolution can be further suppressed.

The LVF 254 is a long pass filter disposed such that the boundary wavelength varies with respect to a position along the z direction. The LVF 256 is a short pass filter disposed such that the boundary wavelength varies with respect to a position along the z direction. The boundary wavelength of the LVF 254 is shorter than the boundary wavelength of the LVF 256. Since such a pair of LVFs 254 and 256 is disposed facing each other, the LVFs 254 and 256 function as a band-pass filter which transmits a particular range of wavelengths.

Similarly as in the LVF 250, each of the LVFs 254 and 256 is movable in the z direction by the drive section, and can dynamically vary the boundary wavelength for incident light with an incident position fixed. Note that the pair of LVFs 254 and 256 is preferably disposed so as to have similar boundary wavelength tendencies in the position along the z direction to each other. That is, the LVFs 254 and 256 is preferably disposed such that both the boundary wavelengths in a position further advanced in the +z direction are shifted to be shorter (or both the boundary wavelengths are shifted to be longer).

The light having passed through the pair of LVFs 254 and 256 is collected through the condenser lens 258 to enter the detector 161. The detector 161 is, for example, a highly sensitive photoelectric conversion element such as a photomultiplier tube, and outputs an electrical signal according to the detected fluorescence to the information processing apparatus 170 via the control apparatus 180.

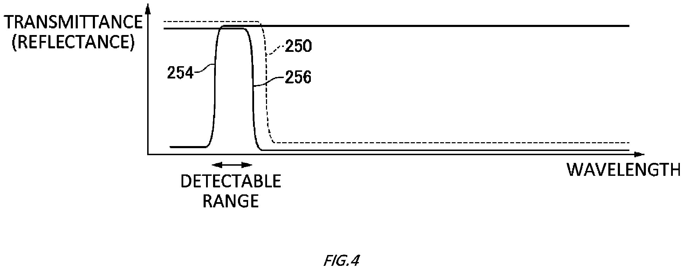

Fig. 4 is an outline view to describe a range of wavelengths transmitted through wavelength selection unit 151 to be detectable by the detector 161. Here, with respect to the wavelength selection unit 151, attention should be paid to reflectance instead of transmittance of the LVF 250, so that the vertical axis represents the reflectance.

As shown in Fig. 4, the shorter wavelength is reflected by the LVF 250, the shorter wavelength is blocked by the LVF 254, and the longer wavelength is blocked by the LVF 256. Furthermore, the boundary wavelength of the LVF 254 is shorter than the boundary wavelength of the LVF 250 and the boundary wavelength of the LVF 256. In this manner, the predetermined range of wavelengths can be transmitted to be set as the detectable range of the detector 161. Furthermore, when the LVF 250 functions as the dichroic mirror, the light having passed through the LVF 250 can be passed on to a subsequent stage such as the wavelength selection unit 152, and other wavelength bands can also be detected.

The wavelength selection units 152 and 153 are disposed behind the wavelength selection unit 151. The wavelength selection unit 152 includes an LVF 260, a concave mirror 262, a pair of LVFs 264 and 266, and a condenser lens 268. The wavelength selection unit 153 includes an LVF 270, a concave mirror 272, a pair of LVFs 274 and 276, and a condenser lens 278. Except for some aspects which will be described below, the configurations of the wavelength selection units 152 and 153 are similar to the configuration of the wavelength selection unit 151 and not described again.

The wavelength selection unit 154 is further disposed behind the wavelength selection unit 153. The wavelength selection unit 154 includes a concave mirror 282, a pair of LVFs 284 and 286, and a condenser lens 288. Except for the absence of the LVF 250 and some aspects which will be described below, the configuration of the wavelength selection unit 154 is also similar to that of the wavelength selection unit 151 and not described again. Note that in light of a state where the concave mirror 282 is not designed to transmit a particular wavelength, it may also be described that the concave mirror 282 is a total reflection mirror.

The detectors 162, 163, and 164 which respectively receive light from the wavelength selection units 152, 153, and 154 are disposed in the detection section 160. The configurations of these detectors 162, 163, and 164 are similar to that of the detector 161 and not described again. Note that in the form of Fig. 2, light enters all of the detectors 161, 162, 163, and 164 from the y direction. In other words, detection surfaces of the detectors 161, 162, 163, and 164 are all in parallel to a z-x plane and face in a same direction.

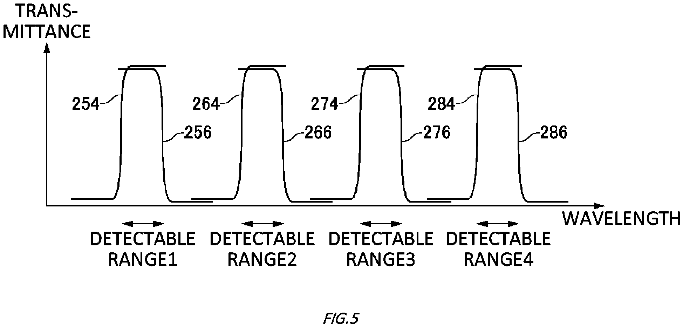

Fig. 5 schematically shows detectable ranges of the four wavelength selection units 151, 152, 153, and 154. Note that to simplify the drawing, illustration of the transmittance and the reflectance of the LVFs 250, 260, and 270 which function as dichroic mirrors is omitted.

In an example shown in Fig. 5, the detectable ranges of the four wavelength selection units 151, 152, 153, and 154 are set in sequence from the shorter wavelengths. That is, a detectable range 1 is set by the pair of LVFs 254 and 256 of the wavelength selection unit 151, and a detectable range 2 is set to be longer wavelengths than those of the detectable range 1 by the pair of LVFs 264 and 266 of the wavelength selection unit 152. Similarly, a detect range 3 is set to be longer wavelengths than those of the detectable range 2 by the pair of LVFs 274 and 276 of the wavelength selection unit 153, and a detectable range 4 is set to be longer wavelengths than those of the detectable range 3 is set by the pair of LVFs 284 and 286 of the wavelength selection unit 154.

According to the example illustrated in Fig. 5, fluorescence from the specimen 210 can be detected in the four different wavelength ranges by the observation system subsequent stage 140 and the detection section 160. In this state, it can also be described that the four different detection channels are provided. In the following description, in light of a state where each of these channels has a substantive optical system, these channels may be referred to as real channels.

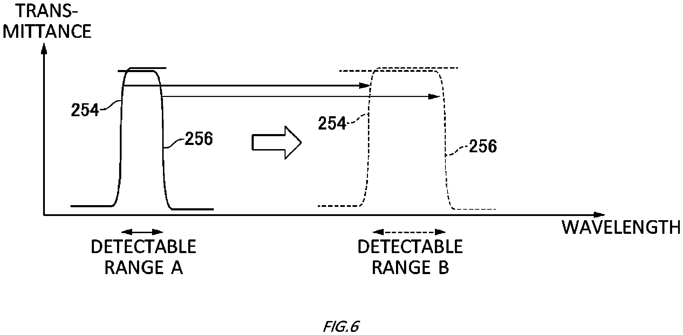

Fig. 6 schematically shows change of the detectable range in the wavelength selection unit 151. Note that to simplify the drawing, illustration of the transmittance and the reflectance of the LVF 250 which functions as a dichroic mirror is omitted.

The LVFs 250, 254, and 256 included the wavelength selection unit 151 are all movable along the z direction where boundary characteristics vary. Accordingly, for example, a detectable range A of Fig. 6 can be set by disposing the LVFs 250, 254, and 256 in respectively corresponding z-locations, and a detectable range B of Fig. 6 can also be set by disposing the LVFs 250, 254, and 256 in other respectively corresponding z-locations. That is, in the optical system of the single wavelength selection unit 151, a plurality of different wavelength ranges can be detected in a time division manner.

In this case, when both the LVF 254 and the LVF 256 are moved in a same direction along the z axis by a same amount, the detectable range is shifted to be shorter wavelengths or longer wavelengths with the bandwidth substantially maintained. On the other hand, at least either one of the LVF 254 or the LVF 256 is relatively moved in an opposite direction along the z axis, the bandwidth of the detectable range is widened or narrowed.

Note that with a similar method, a plurality of different wavelength ranges can also be detected in a time division manner in the other wavelength selection units 152, 153, and 154. In the following description, each detection time when the different wavelength ranges are detected in a time division manner may be referred to as pass.

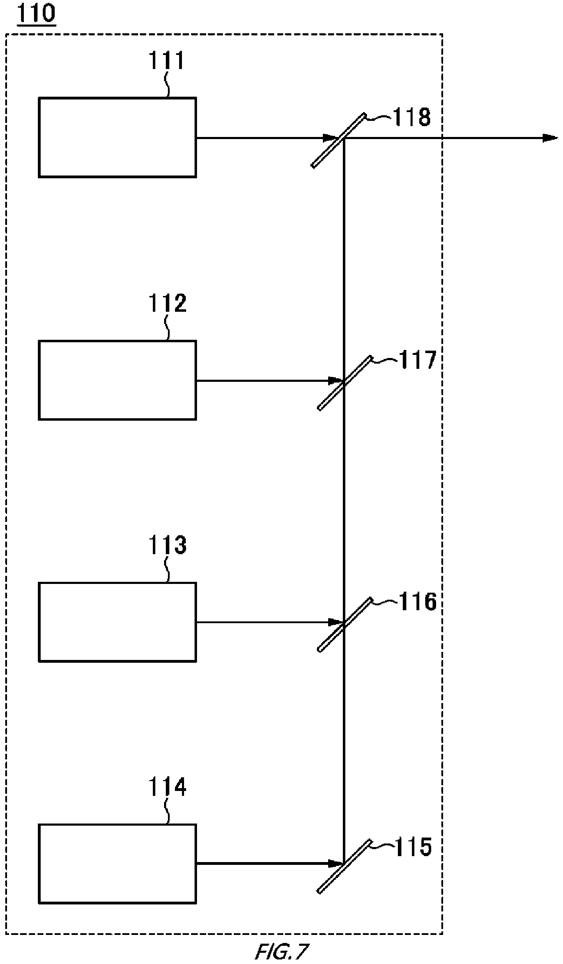

Fig. 7 schematically shows the light source 110. The light source 110 includes four laser light sources 111, 112, 113 and 114 that are configured to emit light beams of different wavelengths from each other. For example, the laser light emitted from the laser light source 111 has a wavelength of 405 nm, the laser light emitted from the laser light source 112 has a wavelength of 488 nm, the laser light emitted from the laser light source 113 has a wavelength of 561 nm and the laser light emitted from the laser light source 114 has a wavelength of 640 nm.

A mirror 115 is configured to reflect the laser light emitted from the laser light source 114. A dichroic mirror 116 is configured to transmit the laser light reflected by the mirror 115 and reflect the laser light emitted from the laser light source 113. A dichroic mirror 117 is configured to transmit the laser light that has passed through the dichroic mirror 116 and the laser light that is reflected by the dichroic mirror 116, and reflect the laser light emitted from the laser light source 112. A dichroic mirror 118 is configured to reflect the laser light that has passed through the dichroic mirror 117 and the laser light that is reflected by the dichroic mirror 117, and transmit the laser light emitted from the laser light source 111.

The laser light emitted from the light source 110 enters the dichroic mirror 121 shown in Fig. 1. Several types of the dichroic mirrors 121 are prepared and arranged on a wheel since the dichroic mirrors may be switched according to a setting change desired by a user with regard to the number of excitation light beams simultaneously entering the specimen surface or the fluorescence acquisition wavelength range.

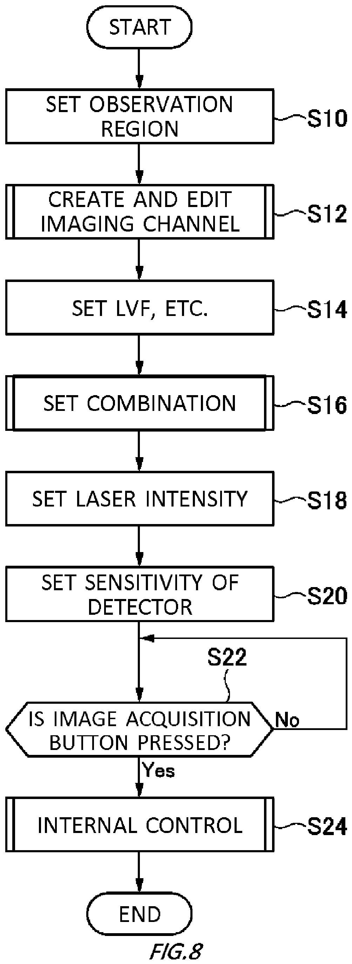

Fig. 8 is an example of a flowchart showing an observation procedure of the microscope 101. First, a region where a fluorescence observation is to be performed on the specimen 210 is designated in the microscope 101 by the user (step S10).

Then, the acquisition wavelength range desired by the user is designated to be created and edited as an imaging channel (S12). The imaging channel will be described below.

A pair of corresponding LVFs based on the above-described imaging channel is set (S14), and a combination of the imaging channel and a real channel is set (S16). Subsequently, a laser intensity is set with regard to each imaging channel (S18), and a sensitivity of the detector is set (S20).

When the setting is finished, the operation stands by until a screen acquisition button is pressed (S22: No). When the screen acquisition button is pressed (S22: Yes), an image is acquired by internal control (S24), and the operation ends.

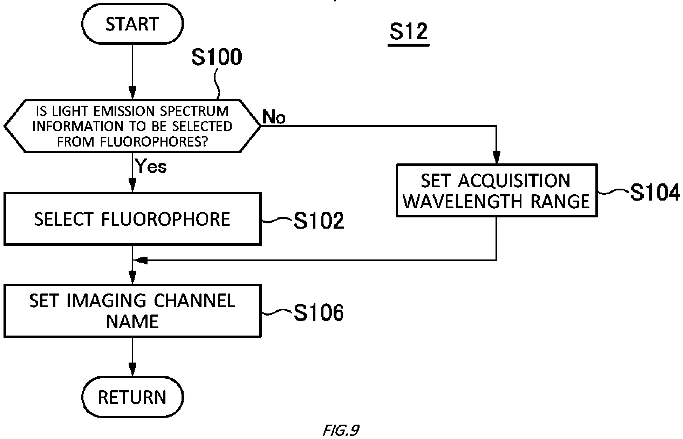

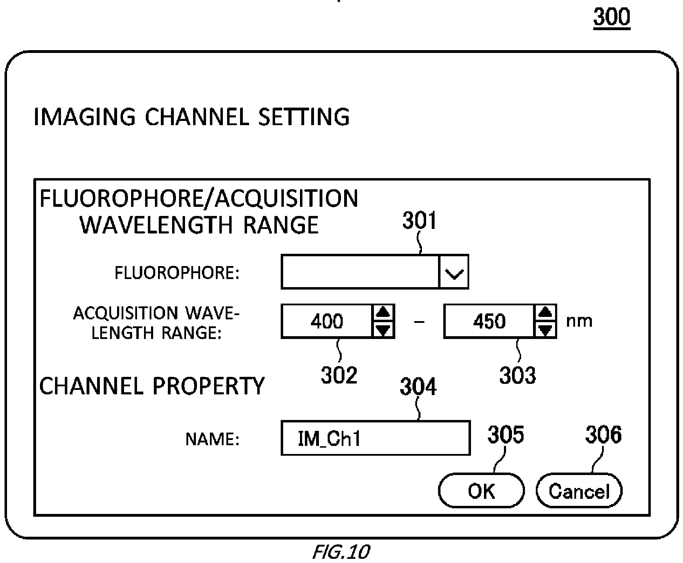

Fig. 9 is a flowchart showing a detail of step S12 to create and edit the imaging channel, and Fig. 10 shows an example of a setting screen 300 in this case.

First, the setting screen 300 is displayed on the display section 172 to accept an input from the user. An input field 301 is a field to select a fluorophore, and input fields 302 and 303 are fields to enter shorter and longer wavelengths to set the acquisition wavelength range, respectively.

When a tab in the input field 301 is selected, it is interpreted that light emission spectrum information is to be selected from emitting dyes (S100: Yes), and a list of selectable fluorophores is displayed in the input field 301. The selectable fluorophores are stored in advance in a memory of the control section 171 together with the corresponding acquisition wavelength ranges. A selection of the emitting dye by the user from the list is accepted (S102).

On the other hand, when the tab in the input field 301 is not selected, it is interpreted that the light emission spectrum information is not to be selected from the emitting dyes (S100: No), and by entering numerical values to the input fields 302 and 303 from the user, the setting of the acquisition wavelength range, that is, the longer and shorter wavelengths of the light emission is accepted (S104). Following step S102 or S104, a setting of an imaging channel name is accepted in an input field 304 (S106).

The imaging channel is created and edited as described above. The imaging channel may be regarded as a so-called provisional channel which is not associated with an actual optical system of the microscope 101 at this time point, in more detail, which is not associated with a real channel. In the example of Fig. 10, the fluorophore is not specified, and the acquisition wavelength range "400 nm to 450 nm" is set as the imaging channel identified by a name "IM_Ch1".

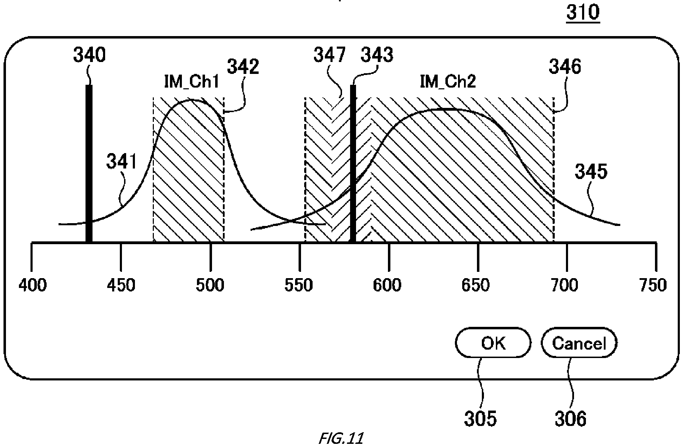

Fig. 11 shows an example of the setting screen 310 in step S14 to set a pair of LVFs for the imaging channel. In the example of Fig. 11, with regard to two imaging channels "IM_Ch1" and "IM_Ch2", respectively corresponding emission spectra 341 and 345, excitation lights 340 and 343, and detectable ranges 342 and 346 are schematically represented with respect to the wavelength on the horizontal axis. A detection prohibiting range 347 is further displayed around the excitation light 343 in response to the inclusion of the excitation light 343 within the detectable range 346 in the imaging channel "IM_Ch2".

Profiles of the emission spectra 341 and 345 and wavelengths of the excitation lights 340 and 343 are stored in advance in the memory of the control section 171 together with the corresponding fluorophores. Note that when wavelengths of an acquisition wavelength range are set as numerical values in the imaging channel, an emission spectrum may be represented on the setting screen 310 by a rectangle in which the range is set as a maximum value, and another range is set as a minimum value (typically, zero).

The detectable ranges 342 and 346 are displayed corresponding to the emission spectra 341 and 345 by default. For example, the detectable ranges 342 and 346 are initially set to be half band widths of the emission spectra 341 and 345. Furthermore, dashed lines on the left and right of the detectable ranges 342 and 346 are movable from the default display positions by drag and drop or the like using a mouse pointer by the user.

Here, the dashed line on the left corresponds to the boundary wavelength of the LVF of the long pass filter, and the dashed line on the right corresponds to the boundary wavelength of the LVF of the short pass filter. Accordingly, when an OK button 305 is pressed after the setting is performed by the user, with regard to the imaging channel "IM_Ch1", the wavelength at the position of the dashed line on the left of the detectable range 342 at this time point is set as the boundary wavelength of the LVF of the long pass filter, and the wavelength at the position of the dashed line on the right is set as the boundary wavelength of the LVF of the short pass filter.

Furthermore, the boundary wavelength of the LVF which functions as the dichroic mirror is automatically set under a predetermined condition with respect to the boundary wavelength of the LVF of the above-described short pass filter for which the longer wavelength of the detectable range has been determined. For example, the boundary wavelength of the LVF which functions as the dichroic mirror is set at a wavelength which is longer by 10 nm than the boundary wavelength of the LVF of the short pass filter (dashed line on the right-hand side of the detectable range 342 in the drawing).

The setting is also similarly performed on the imaging channel "IM_Ch2". Note that by pressing a cancel button 306, the screen returns to the setting screen 300 of Fig. 10 to set the imaging channel.

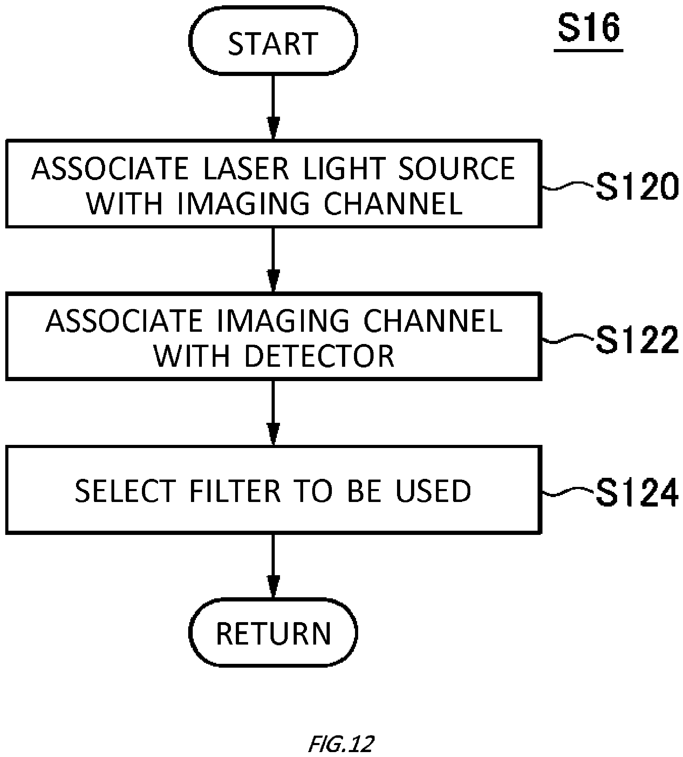

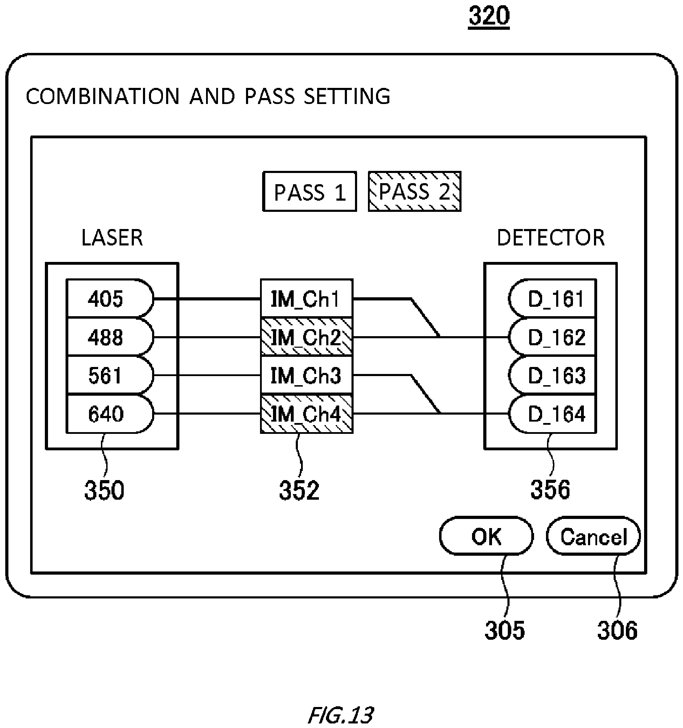

Fig. 12 is a flowchart showing a detail of step S16 to set a combination of the imaging channel and the real channel, and Fig. 13 shows an example of a setting screen 320 in this case. Fig. 13 shows an example in which four imaging channels are created, and while corresponding to those, four imaging channel names such as "IM_Ch1" are displayed in a display field 352.

Lasers which are operable in the microscope 101 are displayed in a display field 350. In response to a state where the four laser light sources 111, 112, 113, and 114 are operable in the example of Fig. 7, the four laser light sources are schematically represented in the display field 350 of Fig. 13 together with respective wavelengths "405 nm", "488 nm", "561 nm", and "640 nm".

Detectors which are operable in the microscope 101 are displayed in a display field 356. In response to a state where the four detectors 161, 162, 163, and 164 are operable in the example of Fig. 2, the four detectors are schematically represented in the display field 356 of Fig. 13. In this case, a type of the detector or the like may be displayed. For example, when a photomultiplier tube is used, "PMT" representing the photomultiplier tube may be displayed.

An association between the laser light source and the imaging channel is accepted (S120). In this case, when any of the laser light sources in the display field 350 is dragged, a line from the laser light source to a dragged position is displayed. When the laser light source is dropped on any of the imaging channels in the display field 352, a line is drawn between the laser light source and the imaging channel on the setting screen 320, which indicates that those are associated with each other.

In this case, with regard to the laser light sources and the imaging channels, when a laser light source is shorter than a minimum wavelength value of the acquisition wavelength range at the time of the setting of the imaging channel, the association with the laser light source is allowed. The laser light sources and the imaging channels may be associated on a one-to-one basis, or may be associated on a one-to-N (N is an integer of two or more) basis or an N-to-one basis. In the example of Fig. 13, the laser light sources and the imaging channels are associated on a one-to-one basis. Note that the imaging channel may be selected earlier, and then the laser light source to be associated with the selected imaging channel may be selected later.

An association between the imaging channel and the detector is accepted (S122). In this case, a method of associating the imaging channel with the detector may be a method similar to the association between the laser light source and the imaging channel.

In this case, the imaging channels and the detectors may be associated on a one-to-one basis, or may be associated on a one-to-N basis or an N-to-one basis. In the example of Fig. 13, the imaging channels and the detectors are associated on a two-to-one basis.

Here, when the imaging channels and the detectors are associated on a basis other than the one-to-one basis, since it is necessary to drive an LVF, to switch a filter cube by a filter wheel, or spend a control period of time to arrange an optical element, it may not be possible to detect the fluorescence simultaneously in time from the specimen 210. In addition, in a situation where a dichroic mirror (dichroic mirror built in the LVF or the filter cube) is arranged in an upstream optical path of the detector set as the association target (optical path before reaching the detector), when the dichroic mirror has a long pass characteristic, the range detectable by the detector set as the association target is longer than the boundary wavelength of the dichroic mirror.

As an illustrative example, in the case of Fig. 2, when the detector 164 set as the association target is concerned, the dichroic mirrors (dichroic mirrors built in the LVFs or the filter cubes) in the upstream optical path (optical path before reaching the detector) are the dichroic mirrors 270, 260, and 250.

As long as the control for changing the characteristics of the dichroic mirror (driving the LVF or switching the filter cube) is not performed until the acquisition wavelength range of the imaging channel becomes longer than the boundary wavelength of the dichroic mirror (which may also be a plurality of dichroic mirrors) arranged in the upstream optical path of the detector set as the association target, the imaging channel is not associated with the detector set as the association target. When a detector which does not receive fluorescence exists among the plurality of detectors, in order that the fluorescence incident by the closest dichroic mirror in the upstream optical path of the detector is not diffracted (some is transmitted, and the rest is reflected) and the whole is transmitted, such a setting is automatically performed that the boundary wavelength is moved to the shortest in the case of the dichroic mirror based on the LVF, or the wheel is rotated to a position at which there is no filter cube in the case of the dichroic mirror built in the filter cube. When the association is not performed, the user is notified of an error.

Therefore, passes are set to detect those in a time division manner. In the example of Fig. 13, two imaging channels "IM_Ch1" and "IM_Ch2" are associated with one detector "D_162". Thus, two passes are set, so that the fluorescence in the imaging channel "IM_Ch1" is detected by the detector "D_162" in a "pass 1" which is earlier in time, and the fluorescence in the imaging channel "IM_Ch2" is detected by the detector "D_162" in a "pass 2" which is later in time.

In the above-described manner, the combination of the imaging channel and the real channel of the microscope 101 is set.

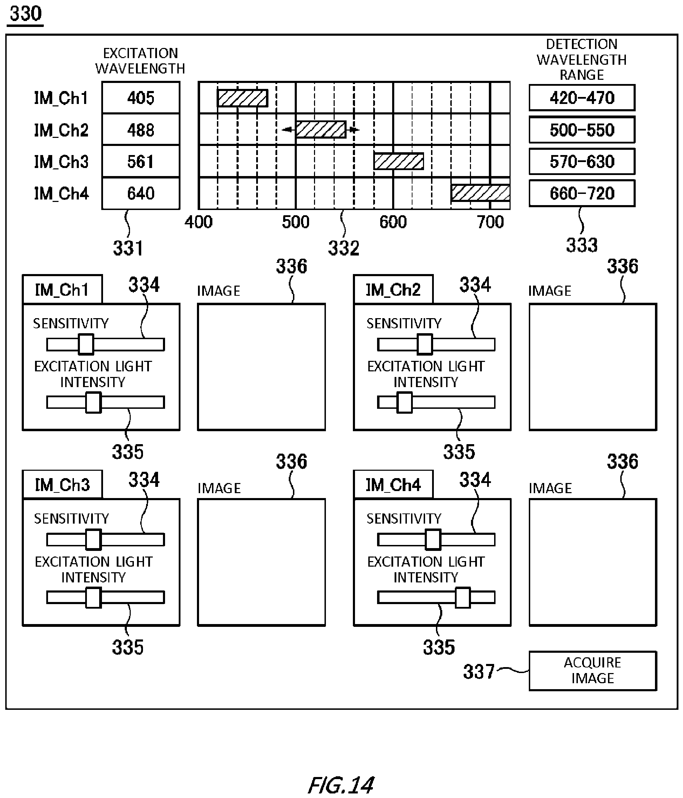

Fig. 14 is an example of a setting screen 330 in step S18 to set a laser intensity and step S20 to perform sensitivity setting of the detector. The imaging channels and the detection wavelength ranges which have been set so far are displayed in display fields 331, 332, and 333.

The setting screen 330 further includes a slider 334 to set a sensitivity (for example, an applied voltage) of the detector corresponding to the imaging channel, and a slider 335 to set an intensity of the excitation light. The sensitivity and the excitation light intensity for each imaging channel can be set by dragging the sliders 334 and 335 in the right and left directions using the input section 174 and the like. Furthermore, when a screen acquisition button 337 on the setting screen 330 is pressed, internal control to acquire an image is performed based on step S22 of Fig. 8 (S24).

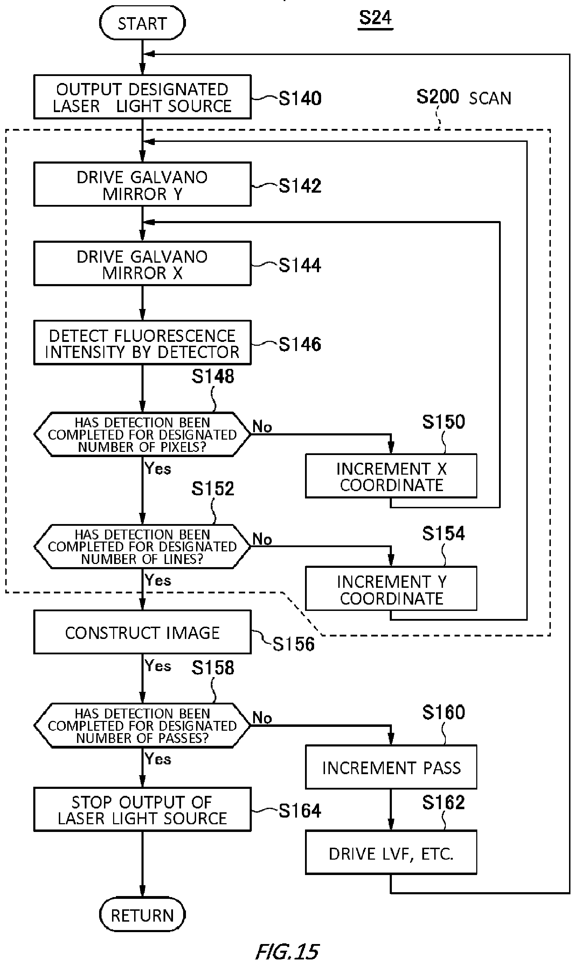

Fig. 15 is a flowchart showing a detail of step S24 that is the internal control to acquire an image. First, an optical system such as positions in the z direction of the LVFs 250, 260, 264, and 266, and the like is set based on a combination with the real channel while corresponding to the imaging channel corresponding to the first pass.

The control apparatus 180 starts to output the excitation light by the laser light source 111 or the like which has been designated among the light sources 110 (S140), and to drives the galvano mirrors 131 and 132 so as to irradiate the region under observation which has been designated with the excitation light (S142 and S144). Here, the laser light source 111 or the like is designated based on the imaging channel of the fluorescence to be detected. In this manner, the detection section 160 detects the fluorescence included in the detectable range corresponding to the imaging channel (S144).

When the intensity of the fluorescence emitted from the light convergence position is detected as a result of the series of operations in steps S144 and S146 as described above, the control apparatus 180 saves the detected intensity and then determines whether the detection has been completed for the designated number of pixels forming one scan line in the initially designated region under observation (S148).

If the number of the pixels for which the detection has been completed has not reached the designated number of pixels (S148: NO), the control apparatus 180 increments the number of the detections for the X coordinate (S150) and the control goes back to the step S144. In this manner, the microscope 101 again drives the galvano mirror 131 to move the light convergence position of the excitation light to a position of a different pixel on the same line (S144) and again detects the intensity of the fluorescence (S146).

The operations of these steps S144 and S146 are repeatedly performed, and if the number of the pixels for which the intensity of the fluorescence is detected has reached the designated number of pixels (S148: YES), the control apparatus 180 determines whether the detection has been completed for the designated number of scan lines in the initially designated region under observation. (S152). If the number of the scan lines for which the detection has been completed has not reached the designated number of scan lines (S152: NO), the control apparatus 180 increments the number of the detections for the Y coordinate (S154) and the control goes back to the step S142. Following this, the control apparatus 180 drives the control section 133 of the galvano mirrors 130 to move the light convergence position of the excitation light to a different scan line and the microscope 101 again detects the intensity of the fluorescence.

If the number of the scan lines for which the intensity of the fluorescence has been detected has reached the designated number of scan lines in the region under observation (S152: YES), the control apparatus 180 constructs an observation image of the region under observation based on the detected fluorescence intensity values (S156). The constructed observation image may be displayed in a display field 336 in the setting screen 330 of the display section 172 or may be stored in a storage unit (not shown) included in the information processing apparatus 170.

Following step S156, the control apparatus 180 determines whether the detection for the designated number of passes has been completed. (S158). If the number of passes for which the detection has been completed has not reached the designated number of passes (S158: NO), the control apparatus 180 increments the number of passes (S160). The control apparatus 180 sets the optical system by driving the LVF 250 or the like based on a combination with the real channel while corresponding to the imaging channel corresponding to the next pass (S162) and the control goes back to the step S140. Therefore, the control apparatus 180 outputs the excitation light by the laser light source 111 or the like which has been designated in the imaging channel, and detects the intensity of the fluorescence again.

If the number of passes for which the detection has been completed has reached the designated number of passes (S162: YES), the control apparatus 180 stops the output of the laser light source (S174). In this manner, the observation operation in the microscope 101 ends.

As described above, in accordance with the microscope 101 according to the present embodiment, multi-band detection, that is, multi-color simultaneous detection can be performed by using the four wavelength selection units, that is, the four real channels. Furthermore, in at least one of the real channels, for example, since the pair of LVFs 254 and 256 is used as the band-pass filter, by changing the positions in the Z direction of the LVFs 254 and 256, the wavelength band to be transmitted can be easy. Thus, the multi-pass detection can be performed in one real channel, that is, the multi-color detection can be performed in a time division manner.

In the real channel including the pair of LVFs 254 and 256, the fluorescence spectral distribution of the specimen 210 can be obtained by similarly continuously acquiring the fluorescence images by further narrowing a width of the detection wavelength range for one cycle (one session) of the detection.

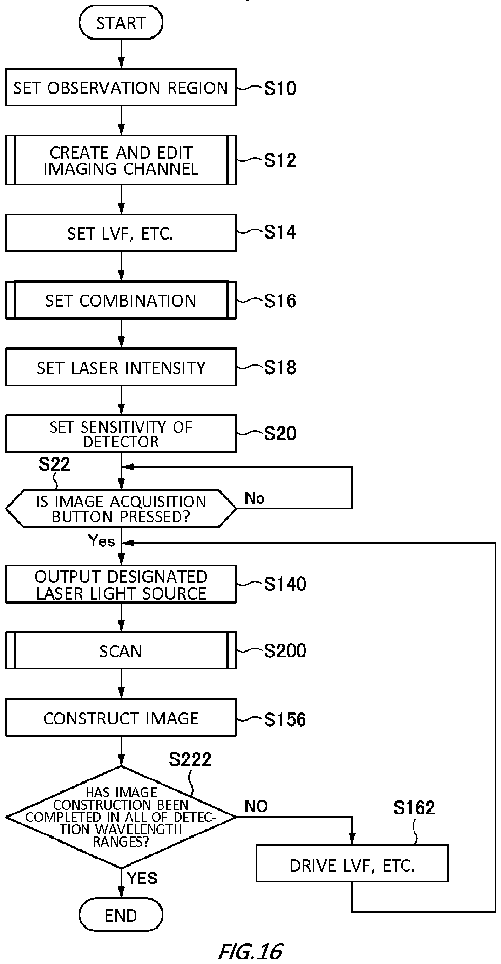

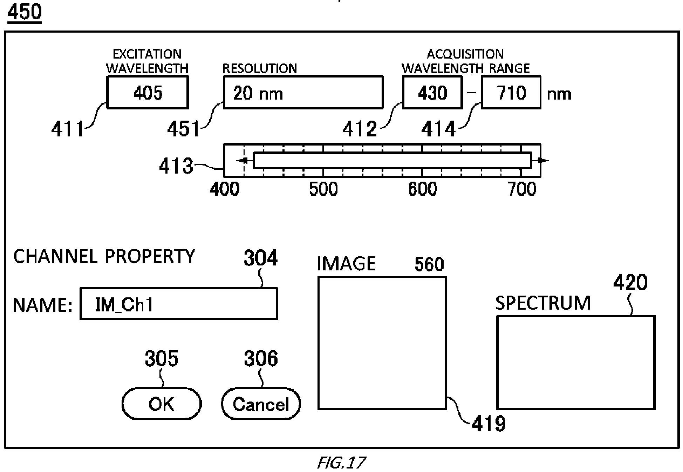

Fig. 16 is a flow chart to acquire the fluorescence spectral distribution by using the microscope 101, and Fig. 17 shows a setting screen 450 corresponding to Fig. 16. In Figs. 16 and 17, the same constituents and operations as the corresponding ones shown in Figs. 1 to 15 are assigned with the identical reference numerals and not described again.

This observation pattern is for a case where the pair of LVFs 254 and 256 is driven to acquire the fluorescence multiple times by using the wavelength selection unit 151. Here, one cycle (one session) of detection is performed over a wavelength range having a width of 20 nm, and the detection is repeatedly performed 14 times so as to acquire a fluorescence spectrum profile for the range from 430 nm to 710 nm.

The setting screen 450 of Fig. 17 is displayed on the display section 172 when the imaging channel is created and edited in step S12 of Fig. 16. A value of the wavelength of the light (excitation light) emitted from the light source 110 can be set in an input field 411. In the example shown in the drawing, 405 nm is designated. In order to enter values into the input field 411, the input sections 173 and 174 of the information processing apparatus 170 can be used.

Input fields 412 and 414 are the regions used when numerical values are input to set the wavelength range over which the spectrum of fluorescence emitted from the specimen 210 is acquired. In order to enter values into the input fields 412 and 414, the input sections 173 and 174 of the information processing apparatus 170 can be used. The input field 412 is the region used to enter the short-side wavelength end of the acquisition wavelength range, and the input field 414 is the region used to enter the long-side wavelength end. In the shown example, the acquisition wavelength range is set to span from the wavelength of 430 nm to the wavelength of 710 nm.

An input field 451 is used to set the width of the detection wavelength range that is part of the acquisition wavelength range set using the above-mentioned input fields 412 and 414 and over which one cycle (one session) of detection is performed to detect a fluorescence spectrum. Note that, in the present embodiment, the width of the detection wavelength range is equivalent to the wavelength resolution of the fluorescence spectrum profile. In the shown exemplary settings, the fluorescence intensity is set to be detected at 20 nm intervals. Therefore, it is designated that the detection is to be performed for 14 different bands over the wavelength band from 430 nm to 710 nm in this example. Note that, in place of the width of the detection wavelength range, the number of bands for detection within the acquisition wavelength range, which is set in the above-mentioned input fields 412 and 414, may be input. In this case, the wavelength resolution is automatically set based on the input number of bands.

In an input field 413, the acquisition wavelength range and wavelength resolution which are set in the input fields 451, 412 and 414 are graphically displayed, and the bar displayed in the input field 413 can be directly manipulated to enter the wavelength range over which the fluorescence spectrum is acquired. The numerical values in the input fields 412 and 414 change hand in hand with the bar displayed in the input field 413.

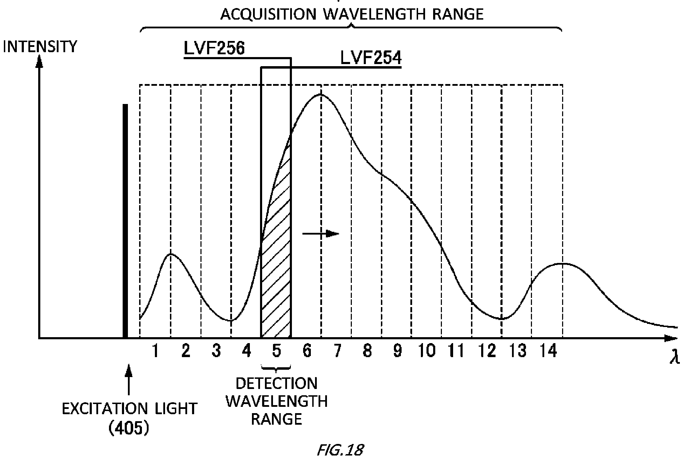

Fig. 18 is a schematic view to describe the acquisition wavelength range and the detection wavelength range corresponding to the observation conditions set in the setting screen 450 shown in Fig. 17. When the fluorescence spectrum is acquired under such conditions, excitation light having a wavelength of 405 nm, which is designated in the input field 411, is emitted toward the specimen 210. Furthermore, over the acquisition wavelength range from 430 nm to 710 nm, which are designated in the input fields 412 and 414, a fluorescence image is acquired with the wavelength resolution (the width of the detection wavelength range) designated in the input field 451, or 14 times at intervals of 20 nm.

In this case, in each detection wavelength range, the shorter wavelength is blocked by the LVF 254, and the longer wavelength is blocked by the LVF 256. In other words, the control apparatus 180 cuts (blocks) a wavelength band lower than a lower limit of each detection wavelength range by the LVF 254, and cuts (blocks) a wavelength band higher than an upper limit of the same range by the LVF 256. In addition, on completion of fluorescence image acquisition for each detection wavelength range, the drive sections 402 of the LVFs 254 and 256 are both operated to select, as the detection wavelength range, the wavelength band adjacent to the wavelength band for which the fluorescence intensity has been detected (steps S222 and S162 in Fig. 16).

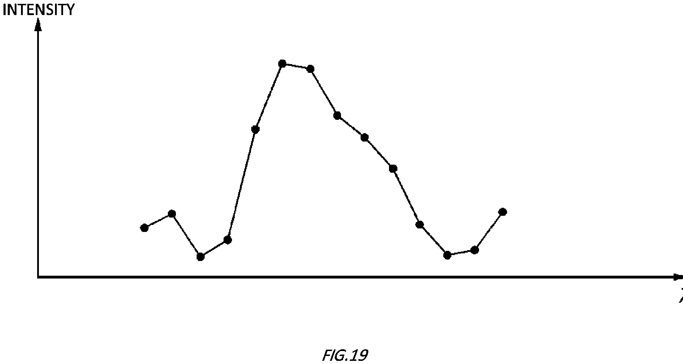

Fig. 19 shows, as an example, a fluorescence spectrum profile of a portion of the specimen 210 that is detected by the microscope 101. The microscope 101 repeatedly performs the above-described series of operations so as to detect the fluorescence intensity for each detection wavelength range with regard to a plurality of detection wavelength ranges. Accordingly, the spectrum profile can be generated for each of the detected portions of the specimen 210 as shown in Fig. 19 by plotting the fluorescence intensity values of the detected images in the graph in which the horizontal axis represents the wavelength λ and the vertical axis represents the intensity. Note that the spectrum profile is displayed in a region 420, for example. Note that the fluorescence intensity values (the light emission intensity values) detected for the respective detection wavelength ranges may be added together to produce a two-dimensional image and the two-dimensional image may be additionally displayed in a region 419 of the setting screen 450.

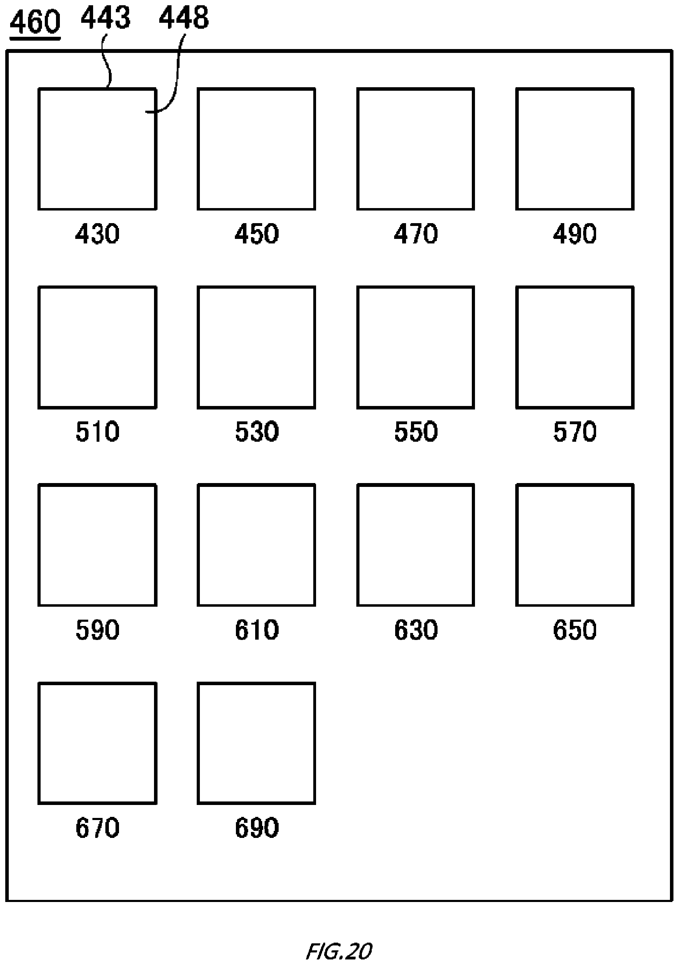

Fig. 20 shows, as an example, a display image 460 that displays the images acquired in the embodiment described with reference to Figs. 17 to 19. An observation image 448 is constructed for a predetermined detection wavelength range. The display image 460 includes a plurality of image display fields 443 designed to display in tiles the plurality of observation images 448 that are constructed for the different detection wavelength ranges. This enables the user to view all of the observation images 448 for the respective detection wavelength ranges at once.

Furthermore, an example will be described in which a plurality of fluorescence spectral distributions is acquired by using the microscope 101. This observation pattern is for a case where the pair of LVFs 254 and 256 and the pair of LVFs 264 and 266 are respectively driven to acquire fluorescence multiple times respectively by using the wavelength selection units 151 and 152. The wavelength selection unit 151 acquires a fluorescence spectrum profile for the range from 430 nm to 610 nm in such a manner that one cycle (one session) of detection is performed over a wavelength range having a width of 20 nm and the fluorescence acquisition is repeatedly performed 9 times, and the wavelength selection unit 152 acquires a fluorescence spectrum profile for the range from 650 nm to 710 nm in such a manner that one cycle (one session) of detection is performed over a wavelength range having a width of 10 nm and the fluorescence acquisition is repeatedly performed 6 times.

The setting screen 450 of Fig. 17 is displayed on the display section 172 for each imaging channel when the imaging channel is created and edited in step S12 of Fig. 16. In the input field 411 of the imaging channel "IM_Ch1", 405 nm is set, and in the input fields 412 and 414, the acquisition wavelength range from the wavelength of 430 nm to the wavelength of 610 nm is set. In the input field 451, the fluorescence intensity is set to be detected at 20 nm intervals. Therefore, it is designated that the detection is to be performed for 9 different bands over the wavelength band from 430 nm to 610 nm in the imaging channel "IM_Ch1". In addition, in the input field 411 of the imaging channel "IM_Ch2", 640 nm is set, and in the input fields 412 and 414, the acquisition wavelength range from the wavelength of 650 nm to the wavelength of 710 nm is set. In the input field 451, the fluorescence intensity is set to be detected at 10 nm intervals. Therefore, it is designated that the detection is to be performed for 6 different bands over the wavelength band from 650 nm to 710 nm in the imaging channel "IM_Ch2".

When the combination setting of the imaging channel and the real channel is performed in step S16 of Fig. 16, the setting screen 320 of Fig. 13 is displayed on the display section 172. On the setting screen 320, the laser light source in the display field 350, the imaging channel in the display field 352, and the detector in the display field 356 are associated with each other. The imaging channel "IM_Ch1" is associated with the laser light source "405 nm" and the detector "D_161", and the imaging channel "IM_Ch2" is associated with the laser light source "640 nm" and the detector "D_162".

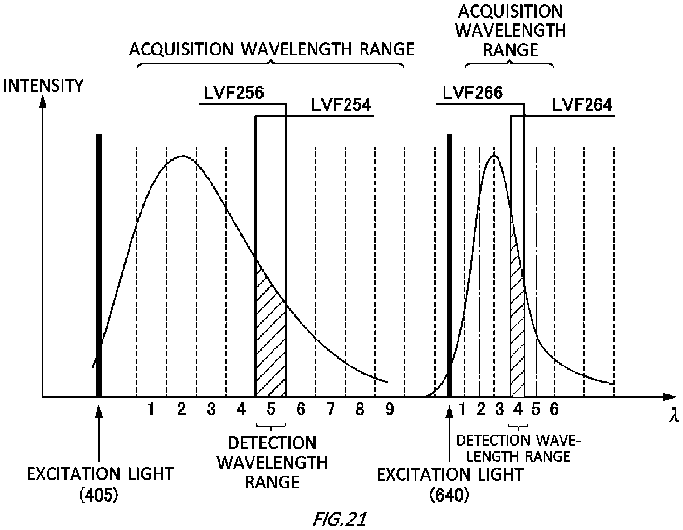

Fig. 21 is a schematic view to describe the acquisition wavelength range and the detection wavelength range corresponding to the observation conditions set in the setting screen 450 shown in Fig. 17 for each imaging channel. When the fluorescence spectrum is acquired under such conditions, excitation light having a wavelength of 405 nm, which is designated in the input field 411 of the imaging channel "IM_Ch1", is emitted toward the specimen 210. Furthermore, over the acquisition wavelength range from 430 nm to 610 nm, which are designated in the input fields 412 and 414, a fluorescence image is acquired with the wavelength resolution (the width of the detection wavelength range) designated in the input field 451, or 9 times at intervals of 20 nm. Excitation light having a wavelength of 640 nm, which is designated in the input field 411 of the imaging channel "IM_Ch2", is emitted toward the specimen 210. Furthermore, over the acquisition wavelength range from 650 nm to 710 nm, which are designated in the input fields 412 and 414, a fluorescence image is acquired with the wavelength resolution (the width of the detection wavelength range) designated in the input field 451, or 6 times at intervals of 10 nm.

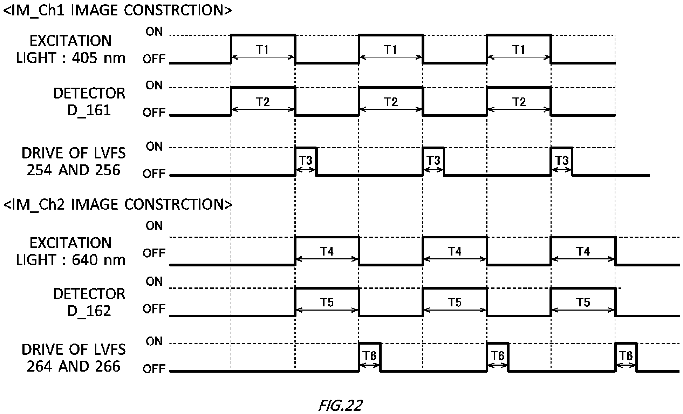

Fig. 22 is a timing diagram to execute an example to acquire a plurality of fluorescence spectral distributions by using the microscope 101. The laser light source 111 irradiates the specimen 210 with excitation light having a wavelength of 405 nm during a period T1, and the detector "D_161" detects the fluorescence emitted from the specimen 210 during a period T2. The pair of LVFs 254 and 256 drives the respective drive sections 402 during a period T3 to select, as the detection wavelength range, the wavelength band adjacent to the wavelength band for which the fluorescence intensity has been detected.

The laser light source 114 irradiates the specimen 210 with excitation light having a wavelength of 640 nm during a period T4, and the detector "D_162" detects the fluorescence emitted from the specimen 210 during a period T5. The pair of LVFs 264 and 266 drives the respective drive sections 402 during a period T6 to select, as the detection wavelength range, the wavelength band adjacent to the wavelength band for which the fluorescence intensity has been detected.

The period T4 and the period T5 start when the period T1 and the period T2 end, and the period T1 and the period T2 start when the period T4 and the period T5 end. In addition, the period T3 starts when the period T1 and the period T2 end, and the period T6 starts when the period T4 and the period T5 end. Furthermore, the period T3 starts when the period T4 and the period T5 start, and the period T6 starts when the period T1 and the period T2 start.

That is, while a period of time from the driving to the settling of the LVFs is taken into account, by using the wavelength selection unit 151, the respective drive sections 402 of the LVFs 264 and 266 of the wavelength selection unit 152 are driven during a period in which the specimen 210 is irradiated with the excitation light having a wavelength of 405 nm and the fluorescence is detected by the detector "D_161", and by using the wavelength selection unit 152, the respective drive sections 402 of the LVFs 254 and 256 of the wavelength selection unit 151 are driven during a period in which the specimen 210 is irradiated with the excitation light having a wavelength of 640 nm and the fluorescence is detected by the detector "D_162". In this manner, the fluorescence detection can be efficiently performed.

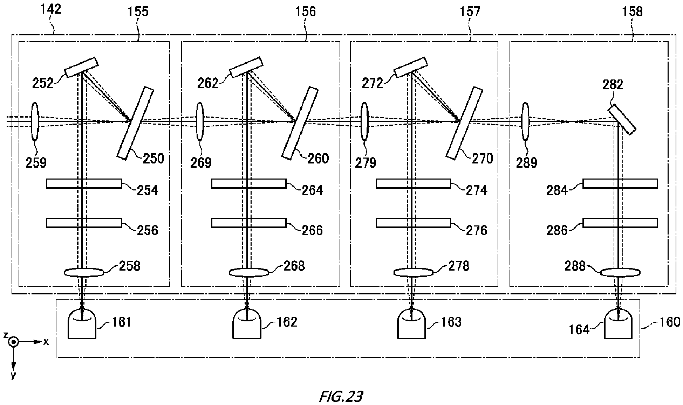

Fig. 23 schematically shows an observation system subsequent stage 142 of another example. In the observation system subsequent stage 142, the same constituents as the corresponding ones of the observation system subsequent stage 140 shown in Fig. 2 are assigned with the identical reference numerals and not described again.

Wavelength selection units 155, 156, 157, and 158 of the observation system subsequent stage 142 include condenser lenses 259, 269, 279 and 289 in addition to the configurations of the wavelength selection units 151, 152, 153, and 154 of the observation system subsequent stage 140. The wavelength selection unit 155 is described as a representative, and the other wavelength selection units 152, 153, and 154 have a similar configuration and are not described again.

The condenser lens 259 collects incident light, but here, is arranged such that a focus position of the condenser lens 259 matches a focus position of the concave mirror 252. In this manner, the concave mirror 252 reflects the incident light into parallel light beams. Accordingly, since the parallel light beams enter each of the pair of LVFs 254 and 256, substantial film thicknesses for the LVFs 254 and 256 become the same also with regard to any rays in the light beams, and the fall of the spectral resolution can be suppressed. Furthermore, when a focal length of the condenser lens 259 is set to be less than a focal length of the concave mirror 252, the spot diameter at the time of incidence on each of the pair of the LVFs 254 and 256 can be decreased. Thus, the fall of the spectral resolution can be further suppressed.

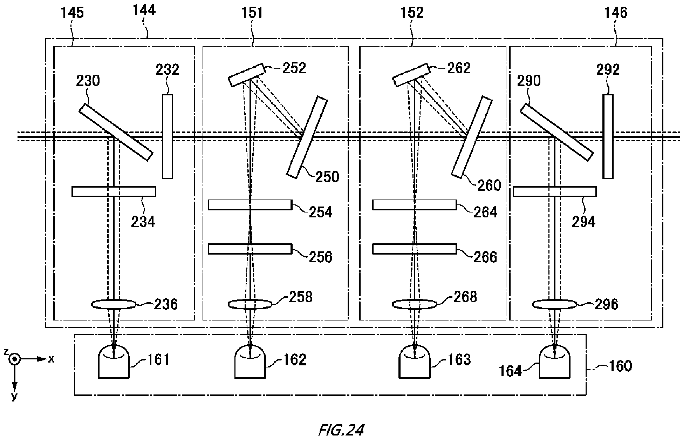

Fig. 24 schematically shows an observation system subsequent stage 144 of still another example. In the observation system subsequent stage 144, the same constituents as the corresponding ones of the observation system subsequent stage 140 shown in Fig. 2 are assigned with the identical reference numerals and not described again.

The observation system subsequent stage 144 includes a wavelength selection unit 145 in a stage before the wavelength selection unit 151. The wavelength selection unit 145 includes a dichroic mirror 230, band-pass filters 232 and 234, and a condenser lens 236.

The dichroic mirror 230 and the band-pass filters 232 and 234 are attached to a filter cube, for example, to reflect a predetermined wavelength band and transmit another predetermined wavelength region as a single unit. Furthermore, the filter cube may be mounted to a filter wheel together with other filter cubes having different wavelength bands to be reflected and transmitted, and any of those may be insertable to an optical path.

The light which has been reflected by the dichroic mirror 230 and passed through the band-pass filter 234 is collected through the condenser lens 236 to be detected by the detector 161. On the other hand, the light which has passed through the dichroic mirror 230 and the band-pass filter 232 enters the subsequent wavelength selection unit 151 to be detected when necessary.

When the light passes through the dichroic mirror 230, the principal ray is shifted in the y direction by an amount corresponding to a board thickness of the dichroic mirror 230. However, the LVF 250 or the like which functions as a dichroic mirror in the subsequent wavelength selection unit 151 or the like is disposed in an orientation causing no variation of the wavelength characteristics, that is, the boundary wavelength in the y direction. Accordingly, the reflective and transmissive characteristics of the wavelength selection unit 151 or the like hardly experience influences from the shift in the y direction.

The observation system subsequent stage 144 further includes a wavelength selection unit 146 in a stage after the wavelength selection unit 152. The wavelength selection unit 146 includes a dichroic mirror 290, band-pass filters 292 and 294, and a condenser lens 296. Except for a state where a wavelength to be selected may be different, the wavelength selection unit 146 has a similar configuration to that of the wavelength selection unit 145 and are not described again.

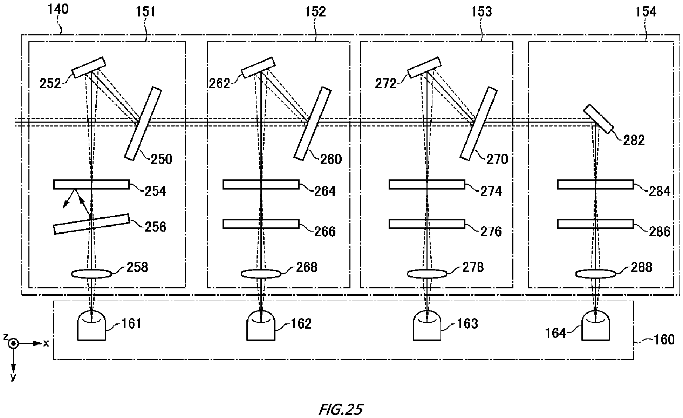

Fig. 25 schematically shows a variant example of the observation system subsequent stage 140. In the observation system subsequent stage 140 of Fig. 25, the LVF 256 is disposed to be slightly tilted in the x-y plane, at an angle of approximately 1 degree, for example, with respect to the principal ray. In this manner, it is possible to avoid an issue that the light which has not transmitted through the LVF 256 but has been reflected enters a different z-location of the LVF 256 while multiple reflection occurs between the pair of LVFs 254 and 256, and the light in an undesired band reaches the detector 161.

Instead or in addition to the tilting of the LVF 256, the LVF 254 may be tilted in the x-y plane. In addition, a similar arrangement may be applied to the other wavelength selection unit 152 and the like.

As described above, in any of the embodiments described above, the multi-band detection, that is, the multi-color simultaneous detection can be performed by using a plurality of wavelength selection units 151 and the like. Furthermore, in at least one of the wavelength selection units 151, since the pair of LVFs 254 and 256 and the like are used as a band-pass filter, by changing the positions in the Z direction of the LVFs 254 and 256, the wavelength band to be transmitted can be easily changed. Thus, the multi-pass detection can be performed by the single wavelength selection unit 151, that is, the multi-color detection can be performed in a time division manner.

Note that in any of the embodiments described above, the wavelength selection unit 151 and the like are set in the four stages. However, the number of stages is not limited to this, and it is sufficient when two or more stages are used. Thus, the multi-band detection, that is, the multi-color simultaneous detection can be performed.

In addition, in any of the above-described embodiments, the LVF 254 or the like among the pair of LVFs 254 and 256 and the like is a long pass filter and the LVF 256 or the like is a sheet pass filter. Instead, the LVF 254 or the like may be a short pass filter, and the LVF 256 or the like may be a long pass filter.

In addition, in any of the above-described embodiments, the wavelength selection unit 152 in a later stage selects longer wavelengths. Instead, the wavelength selection unit 152 in a later stage may select shorter wavelengths. In addition, each of the wavelength selection units may be so-called unitized in such a manner that components such as the LVFs constituting itself are accommodated in a casing or attached to a base member. In this case, each unit of the wavelength selection units may be removably inserted to the microscope 101.

While the present invention has been described by way of the embodiments, the technical scope of the present invention is not limited to the above described embodiments.

It is apparent to persons skilled in the art that various alterations or improvements can be made to the above described embodiments. It is also apparent from the description of the claims that embodiments added with such alterations or improvements can be included in the technical scope of the present invention.

The operations, procedures, steps, and stages of each process performed by an apparatus, system, program, and method illustrated in the claims, embodiments, or diagrams can be performed in any order as long as the order is not indicated by "prior to," "before," or the like and as long as the output from a previous process is not used in a later process. Even if the operation flow is described by using phrases such as "first" or "next" in the scope of the claims, specification, or drawings, it does not necessarily mean that the process must be performed in this order.

### EXPLANATION OF REFERENCES

101: microscope; 110: light source; 111, 112, 113, 114: laser light source; 115, 123: mirror; 116, 117, 118, 121, 230, 290: dichroic mirror; 122: relay lens; 124: condenser lens; 126: collimator lens; 125: pinhole; 130: galvano scanner; 131, 132: galvano mirror; 140, 142, 144: observation system subsequent stage; 146, 151, 152, 153, 154, 155, 156, 157, 158: wavelength selection unit; 160: detection section; 161, 162, 163, 164: detector; 170: information processing apparatus; 171: control section; 172: display section; 173, 174: input section; 180: control apparatus; 191: objective lens; 192: lens; 210: specimen; 220: illumination optical system; 230: dichroic mirror; 232, 234, 292, 294: band-pass filter; 236, 258, 259, 268, 269, 278, 279, 288, 289, 296: condenser lens; 240: observation optical system; 250, 254, 256, 260, 264, 266, 270, 274, 276, 284, 286: LVF; 252, 262, 272, 282: concave mirror; 300, 310, 330: setting screen; 301, 302, 303, 304: input field; 305: OK button, 306: cancel button, 334, 335: slider; 331, 332, 333, 336, 350, 352: display field; 337: screen acquisition button; 340, 343: excitation light; 341, 345: emission spectrum; 342, 346: detectable range; 347: detection prohibiting range; 400: optical filter; 402: drive section.

## Claims

1. A microscope comprising:
an illumination optical system which irradiates a specimen with excitation light;
a detector which detects fluorescence emitted from the specimen; and
an observation optical system which guides fluorescence to the detector, wherein
the observation optical system includes:
a first optical filter which has wavelength reflection and transmission characteristics that vary depending on a position where light enters;
a second optical filter which is disposed in an optical path of light reflected by the first optical filter and has a boundary wavelength of transmission changing with respect to a position along a first direction, and which transmits light having a wavelength longer than a first boundary wavelength at a position where the light which has been reflected enters; and
a third optical filter which is disposed in the optical path of the light reflected by the first optical filter and has a boundary wavelength of transmission changing with respect to a position along the first direction, and which transmits light having a wavelength shorter than a second boundary wavelength at a position where the light which has been reflected enters, and
the first boundary wavelength is shorter than the second boundary wavelength.

2. The microscope according to claim 1, wherein the first optical filter has the wavelength reflection and transmission characteristics that vary depending on a position along the first direction.

3. The microscope according to claim 2, wherein with respect to the light which enters, the first optical filter is disposed to be tilted at an angle of less than 45 degrees in a plane intersecting with the first direction.

4. The microscope according to any one of claims 1 to 3, wherein the second optical filter and the third optical filter are movable along the first direction.

5. The microscope according to any one of claims 1 to 4, wherein the first optical filter is movable along the first direction.

6. The microscope according to any one of claims 1 to 5, wherein the first direction is a gravitational direction.

7. The microscope according to any one of claims 1 to 6, wherein with respect to either one of the second optical filter or the third optical filter, another of the second optical filter or the third optical filter is disposed to be tilted in a plane intersecting with the first direction.

8. The microscope according to any one of claims 1 to 7, wherein the observation optical system further includes a concave mirror which collects the light reflected by the first optical filter between the second optical filter and the third optical filter.

9. The microscope according to any one of claims 1 to 7, wherein the observation optical system further includes a concave mirror which causes the light reflected by the first optical filter to turn into parallel light beams to enter the second optical filter and the third optical filter.

10. The microscope according to any one of claims 1 to 9, wherein
the observation optical system further includes:
a reflective element on which light having passed through the first optical filter is incident and which reflects at least a part of the light;
a fourth optical filter which is disposed in an optical path of the light reflected by the reflective element and has a boundary wavelength changing with respect to a position along the first direction, and which transmits light having a wavelength longer than a third boundary wavelength at a position where the light which has been reflected enters; and
a fifth optical filter which is disposed in the optical path of the light reflected by the reflective element and has a boundary wavelength changing with respect to a position along the first direction, and which transmits light having a wavelength longer than a fourth boundary wavelength at a position where the light which has been reflected enters, and
the third boundary wavelength is shorter than the fourth boundary wavelength.

11. The microscope according to claim 10, wherein the reflective element is a sixth optical filter which has wavelength reflection and transmission characteristics that vary depending on a position where light enters or a total reflection mirror.

12. The microscope according to claim 10 or 11, wherein
the first optical filter, the second optical filter, and the third optical filter are accommodated in a first unit,
the sixth optical filter or the reflective element, the fourth optical filter, and the fifth optical filter are accommodated in a second unit, and
the first unit and the second unit are configured to be detachably insertable.

13. The microscope according to any one of claims 1 to 12, further comprising:
a first detector which receives light that is a part of light reflected by the first optical filter and that has travelled through the second optical filter and the third optical filter; and
a second detector which receives a part of light that has passed through the first optical filter, wherein
a light receiving surface of the first detector and a light receiving surface of the second detector face in a same direction.
